(19) Europäisches Patentamt / European Patent Office / Office européen des brevets

(11) **EP 3 019 786 B1**

(12) **FASCICULE DE BREVET EUROPEEN**

(45) Date de publication et mention de la délivrance du brevet:
**20.11.2019 Bulletin 2019/47**

(21) Numéro de dépôt: **14729950.7**

(22) Date de dépôt: **13.05.2014**

(51) Int Cl.:
**F17C 5/00** *(2006.01)*      **F17C 5/06** *(2006.01)*

(86) Numéro de dépôt international:
**PCT/FR2014/051104**

(87) Numéro de publication internationale:
**WO 2015/004344 (15.01.2015 Gazette 2015/02)**

(54) **PROCÉDÉ ET STATION DE REMPLISSAGE DE GAZ**

GASFÜLLVERFAHREN UND -STATION

GAS FILLING METHOD AND STATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2013 FR 1356806**

(43) Date de publication de la demande:
**18.05.2016 Bulletin 2016/20**

(73) Titulaire: **L'Air Liquide Société Anonyme pour l'Etude et l'Exploitation des Procédés Georges Claude
75007 Paris (FR)**

(72) Inventeur: **ALLIDIERES, Laurent
38410 Saint Martin d'Uriage (FR)**

(74) Mandataire: **De Cuenca, Emmanuel Jaime
L'Air Liquide S.A.
Direction Propriété Intellectuelle
75 Quai d'Orsay
75321 Paris Cedex 07 (FR)**

(56) Documents cités:
**WO-A2-2006/031365      WO-A2-2006/065673**

**Description**

La présente invention concerne un procédé et une station de remplissage.

L'invention concerne plus particulièrement un procédé de remplissage d'au moins un contenant tampon d'une station de remplissage d'hydrogène gazeux sous pression, la station de remplissage comprenant au moins un contenant tampon et un circuit fluidique relié audit au moins un contenant tampon, le circuit de la station de remplissage comprenant une première extrémité reliée à au moins une source 'hydrogène gazeux pour assurer le remplissage du au moins un contenant tampon par du gaz provenant de la source, le circuit comprenant une seconde extrémité munie d'une conduite de transfert destinée à être reliée de façon amovible à un réservoir, pour remplir ledit réservoir à partir du au moins un contenant tampon.

Le remplissage rapide (c'est-à-dire typiquement en moins de 15 minutes) de réservoirs de gaz (hydrogène) de véhicules est généralement réalisé par des équilibrages de pression successifs. C'est-à-dire que des contenants tampon stockant du gaz à des pressions élevées croissantes (par exemple 200, 300, 450 ou 850 bar) sont mis en relation fluidique successivement avec le réservoir à remplir.

Ces méthodes sont décrites abondamment dans la littérature. On pourra par exemple se référer aux documents   FR2919375A1,   FR2973858A1, FR2919375A1 décrivant des stations de remplissage auxquelles la présente invention peut s'appliquer.

L'hydrogène des réservoirs de tels véhicules est généralement prévu pour alimenter une pile à combustible. Les piles à combustibles (notamment du type « PEMFC ») doivent être alimentées avec un gaz hydrogène très « pur ». En effet, une littérature abondante décrit les impacts négatifs des impuretés (telles que les espèces chimiques, l'eau, le CO, l'H2S) dans l'hydrogène en terme de performances et de durée de vie des piles à combustible.

Des normes strictes ont été développées pour s'assurer que l'hydrogène livré dans les réservoirs n'endommage pas les piles (cf. par exemple par exemple la norme ISO14687-2).

Les standards de gaz industriels obtenus grâce à des procédés de fabrication connus et relativement peu couteux ne permettent pas d'assurer un tel niveau de pureté. Il est généralement admis que pour garantir des puretés d'hydrogène toujours compatibles avec les exigences des piles à combustibles, il faut rajouter en amont des stations de remplissage des étapes de purification du gaz hydrogène produit industriellement. Ces étapes de purification sont cependant coûteuses (par exemple purifications sur lit d'adsorbant fonctionnant à température cryogénique ou avec des membranes en palladium).

Ainsi, pour garantir une pureté d'hydrogène conforme aux spécifications des piles à combustible, une solution connue consiste à alimenter la station de remplissage avec de l'hydrogène liquide. Cet hydrogène est par définition très pur car sa température (de l'ordre de 20K) fait précipiter sous forme solide toutes les impuretés. Une autre solution consiste à utiliser de l'hydrogène purifié à l'aide d'épurateurs par adsorbeur fonctionnant à une température cryogénique. Une autre solution consiste à utiliser de l'hydrogène provenant directement d'un électrolyseur suivi d'une étape de désoxydation sur lit de catalyseur et de séchage sur adsorbant.

Ces solutions entraînent également un surcoût important (surcoût de 40% à 100% par rapport au coût de l'hydrogène produit industriellement).

Une autre solution connue utilise un analyseur de gaz installé en amont des compresseurs de la station de remplissage afin de valider la pureté du gaz. Lorsque qu'un seuil d'impuretés est dépassé dans le gaz fourni au compresseur, les vannes d'entrée du ou des compresseurs sont refermées ce qui provoque l'arrêt du compresseur. La station de remplissage est alors en mode dégradé (capacités de remplissage volontairement réduites afin de conserver une autonomie de fonctionnement). Le redémarrage du compresseur est alors dans la plupart des cas une opération manuelle, exigeant la présence d'un opérateur sur place. De plus, si la station est alimentée par une source de gaz provenant d'un générateur sur site ou décentralisé, l'hydrogène impur (c'est-à-dire non conforme aux spécifications) est alors rejeté à l'air pour permettre au système de récupérer un niveau de pureté nominal en agissant automatiquement ou manuellement sur les paramètres de production de l'hydrogène. Ceci génère un gaspillage d'énergie.

Le document WO2006031365A décrit un procédé de remplissage de réservoir avec un mélange hydrogène, gaz naturel et un capteur de densité pour contrôler le dosage entre ces deux composants.

Le document WO2006065673A2 décrit un procédé de production d'hydrogène gazeux à partir d'une source de carburant utilisant une unité de purification. Des capteurs de produit sont prévus aux sorties de l'unité de purification pour contrôler le moteur à vitesse variable de rotation des lits d'absorbant de l'unité.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, et conforme à la revendication 1, essentiellement caractérisé en ce qu'il comprend une étape de détermination de concentration courante d'au moins une impureté dans l'hydrogène dans le contenant tampon au cours de son remplissage, une étape de comparaison de ladite concentration courante de l'impureté par rapport à un seuil de concentration déterminé et, lorsque la concentration courante de la au moins une impureté atteint ledit seuil de concentration, un arrêt du remplissage dudit contenant tampon.

Par ailleurs, des modes de réalisation de l'invention peuvent comporter l'une ou plusieurs des caractéristiques suivantes :

- l'étape de détermination de concentration courante d'au moins une impureté comprend une mesure par capteur(s) de la concentration de l'impureté au niveau de la au moins une source d'hydrogène et/ou un niveau du circuit fluidique de la station de remplissage et une détermination de la quantité de gaz transféré en temps réel dans le contenant tampon au cours du remplissage de ce dernier,

- la détermination de la quantité de gaz transféré en temps réel dans le contenant au cours de son remplissage comprend au moins l'un parmi : une mesure par un débitmètre dans le circuit, une mesure de la variation de pression dans le contenant tampon au cours du remplissage de ce dernier,

- le procédé comprend une étape de mémorisation de ladite concentration courante déterminée, l'étape de détermination de concentration courante d'au moins une impureté dans l'hydrogène dans le contenant tampon lors d'un remplissage prenant en compte la concentration d'impureté résiduelle dans le réservoir tampon déterminée lors du remplissage précédent,

- la station de remplissage comprend plusieurs contenant tampon remplis avec de l'hydrogène gazeux sous pression à des pressions distinctes,

- après remplissage, les contenant tampon sont utilisés successivement par ordre de pression croissante pour remplir un réservoir (8) via des équilibrages de pression successifs,

- la au moins une source d'hydrogène comprend au moins l'un parmi : un réseau de gaz d'hydrogène à une pression comprise entre 1,3 bar abs et 200 bar abs, un organe de production d'hydrogène,

- l'organe de production d'hydrogène comprend au moins l'un parmi : un électrolyseur, un reformeur de gaz naturel, un dispositif de craquage de méthanol, un dispositif de reformage autotherme, un dispositif d'oxydation partiel,

- la au moins une impureté comprend au moins l'un parmi : de l'oxyde de carbone, de l'eau, au moins un composé soufrés ou halogénés, le $CO_2$, l'Azote, l'Hélium, le $NH_3$, au moins un hydrocarbures, $O_2$, et l'argon,

- la au moins une impureté comprend de l'oxyde de carbone, le seuil de concentration étant compris entre 0.1 ppm et 10 ppm et de préférence compris entre 0,1ppm et 0,3ppm,

- la au moins une impureté comprend de l'eau et en ce que le seuil de concentration est compris entre 1 ppm et à 100 ppm et de préférence compris entre 3ppm et 7ppm,

- la station de remplissage comprenant au moins un organe de compression pour comprimer de l'hydrogène gazeux fourni au contenant tampon ou au réservoir.

- après arrêt du remplissage dudit contenant tampon en raison d'une concentration courante de l'impureté au niveau du seuil, le procédé comporte une étape de remplissage d'un autre contenant tampon, c'est-à-dire que le transfert de gaz provenant de la source est commuté vers un autre tampon selon le même processus,

- après arrêt du remplissage dudit contenant tampon en raison d'une concentration courante de l'impureté au niveau du seuil, le remplissage de ce même contenant tampon n'est redémarré que lorsque la concentration en impureté dans le gaz de la source fourni redevient inférieure à la concentration en impureté dans le contenant tampon,

- le procédé comporte une étape de stockage intermédiaire temporaire du gaz fourni par la au moins une source avant sa fourniture au contenant tampon pour le cas échéant pour attendre la disponibilité de la détermination de concentration courante avant de remplir le contenant tampon,

- le circuit de la station de remplissage comprend un stockage de gaz intermédiaire disposé entre la au moins une source et le au moins un stockage tampon pour le cas échéant synchroniser le remplissage du contenant tampon avec les informations disponibles de l'organe de détermination de la concentration courante en impureté,

- le stockage intermédiaire est situé entre un organe de détermination de la concentration courante et une vanne adjacente à l'organe de détermination de la concentration courante,

- la station de remplissage comprend trois contenants tampon destinés à stocker de l'hydrogène sous pression à des pressions respectives, comprises par exemple respectivement entre 150 et 350bar, 350 et 700bar, 700bar et 850bar,

- la station comprend au moins un échangeur de refroidissement en échange thermique avec le gaz destiné à être fourni au réservoir et/ou à un contenant tampon,

- la logique électronique de commande comprend un système d'acquisition et de traitement et de données,

- la logique électronique de commande comprend une mémoire de données conservant la concentration courante d'impureté(s) dans le au moins un contenant tampon par mise à jour à chaque remplissage.

L'invention peut concerner également une station de remplissage pour réservoir d'hydrogène gazeux sous pression ainsi que définie par la revendication 13.

Selon d'autres particularités possibles :

- l'organe de détermination de concentration courante comprend au moins un capteur(s) de la concentration de l'impureté au niveau de la au moins une source d'hydrogène et/ou un niveau du circuit fluidique de la station de remplissage et au moins un organe de détermination de la quantité de gaz transférée en temps réel dans le contenant tampon au cours du remplissage de ce dernier,

- l'organe de détermination de la quantité de gaz transféré dans le contenant tampon comprend au moins l'un parmi, un débitmètre situé dans le circuit un capteur de mesure de la pression dans le contenant tampon,

L'invention peut concerner également tout dispositif ou procédé alternatif comprenant toute combinaison des caractéristiques ci-dessus ou ci-dessous, tout en restant dans le cadre des revendications.

D'autres particularités et avantages apparaîtront à la lecture de la description ci-après, faite en référence aux figures dans lesquelles :

- la figure 1 qui représente une vue schématique et partielle illustrant la structure et le fonctionnement d'une station de remplissage selon un exemple possible de réalisation de l'invention,
- la figure 2 représente une vue schématique et partielle, d'un détail de la station de la figure 1 selon un autre mode de réalisation possible,
- la figure 3 représente une vue schématique et partielle illustrant le principe général de fonctionnement de l'invention.

La station 100 de remplissage représenté à titre d'exemple non limitatif est une station prévue pour assurer le remplissage de réservoirs 8 d'hydrogène gazeux à haute pression (par exemple à une pression comprise entre 300 et 850 bar).

Classiquement, la station 100 de remplissage comprend plusieurs contenant 1, 2, 3 tampon (trois dans cet exemple non limitatif).

Chaque contenant 1, 2, 3 tampon est un réservoir ou ensemble de réservoirs prévu(s) pour contenir de l'hydrogène gazeux sous pression à une pression déterminée. La station 100 comprend un circuit 11, 12, 13, 4, 5, 6 fluidique comportant une pluralité de conduites et de vannes. Le circuit 11, 12, 13, 4, 5, 6 est relié aux contenants 1, 2, 3 tampon. Le circuit comprend une première extrémité 4, 5 destinée à être raccordée à au moins une source de 14, 15 d'hydrogène gazeux pour permettre le remplissage du au moins un contenant 1, 2, 3 tampon avec du gaz provenant de la au moins une source 14, 15.

La ou les sources 14, 15 d'hydrogène peuvent comprendre classiquement au moins l'un parmi : un réseau 14 de gaz d'hydrogène à une pression comprise entre 1.3 bar abs et 200 bar abs, un organe 15 de production d'hydrogène tel qu'un électrolyseur, un reformeur de gaz naturel (« SMR »), un dispositif de craquage de méthanol, un dispositif de reformage autotherme (« ATR »), un dispositif d'oxydation partiel (« POX »)...

Le circuit 11, 12, 13, 4, 5, 6 comprend une seconde extrémité munie d'au moins une conduite 6 de remplissage destinée à être reliée de façon amovible (via un raccord 66 approprié) à un réservoir 8 à remplir.

Plus précisément, les contenants tampon 1, 2, 3, sont reliés en parallèle, via des vannes 11, 12, 13 respectives, à la conduite 6 de remplissage.

De même, une, deux ou plus de deux sources 14, 15 de gaz peuvent être reliées en parallèle via des vannes respectives 24, 25 à la conduite de remplissage 6.

La conduite 6 de remplissage peut comporter, en amont du raccord 66, un ou, comme représenté dans cet exemple, deux compresseurs 67, 7. Les deux compresseurs 67, 7 peuvent être disposés en série et muni chacun d'une vanne amont 16, 26 respective et d'une vanne aval 17, 27 respective. Comme représenté, un conduite 18 de dérivation du compresseur 7 aval (côté raccord 66) peut être prévue. La conduite 18 de dérivation peut comporter deux vannes 19 et 119 et peut être la conduite collectrice qui raccorde les contenants 1, 2, 3 tampon à la conduite 6 de remplissage. Cette conduite 18 de dérivation permet également le remplissage des contenant 1, 2, 3 tampon via le ou les compresseurs 67, 7.

De plus, comme illustré en pointillés, une capacité 21 tampon peut être prévue facultativement en parallèle de la conduite 6 de remplissage, pour stocker du gaz issu des sources avant sa compression. Enfin, de façon connue en soi et comme représenté schématiquement, un système 22 de refroidissement (échangeur de chaleur...) du gaz transféré dans le réservoir 8 peut être prévu facultativement dans le circuit, par exemple au niveau de la partie aval de la conduite 6 de remplissage.

De façon connue, une telle architecture permet de remplir les réservoirs 1, 2, 3 tampon à des pressions déterminées en comprimant du gaz fourni par une ou des sources 14, 15 d'hydrogène. Les contenants tampon 1, 2, 3 peuvent ensuite être utilisés pour remplir le réservoir 8 « par cascade ». Le cas échéant, le ou les compresseurs 67, 7 peuvent suppléer ou compléter ces phases d'équilibrage de pression (on pourra se référer par exemple décrits dans les documents cités plus haut).

La station 100 peut comporter une logique 20 électronique de commande de la station de remplissage, la logique 20 électronique peut notamment commander au moins une vanne du circuit, par exemple une vanne d'entrée de gaz dans le compresseur 67, 7 et/ou un interrupteur du ou des compresseurs 67, 7. La logique 20 électronique comprend, par exemple, un microprocesseur mettant en œuvre des fonctions de mémoire et de calcul et, si besoin, une interface pour un utilisateur.

Selon une particularité avantageuse, la station 100 permet de déterminer la concentration courante d'au moins une impureté dans l'hydrogène avec lequel est rempli les contenants 1, 2, 3 tampon. Plus précisément, il est mesuré et/ou calculé en continu la concentration en impuretés dans le ou les contenants 1, 2, 3 tampon en cours de remplissage de ces derniers. De plus, lorsque cette concentration en impureté atteint un seuil déterminé (par exemple la spécification maximum tolérée par l'utilisation aval (une pile à combustible alimentée par les réservoirs 8 à remplir), le remplissage du contenant 1, 2, 3 tampon est arrêté. De cette façon, la station 100 de remplissage peut garantir une pureté d'hydrogène prédéfinie.

De cette façon, l'invention permet de profiter de la capacité de dilution des impuretés autorisées par les contenants 1, 2, 3 tampon. L'arrêt du compresseur 67, 7 et/ou la fermeture des vannes et/ou l'arrêt du remplissage des contenants tampon n'est ainsi réalisé que lorsque la quantité totale d'impuretés introduites dans les contenants 1, 2, 3 tampon est au dessus d'un seuil qui entraînerait un niveau d'impureté inacceptable dans le réservoir 8 (hors spécification).

Cette solution permet d'absorber les quantités de gaz momentanément impur. En effet, généralement l'impureté de l'hydrogène fourni par des sources 14, 15 est le fait d'un déréglage momentané des moyens de production en amont.

C'est-à-dire que l'hydrogène contient donc des « bouffées » d'impuretés ponctuelles. Les procédés industriels de production ou de purification d'hydrogène disposent tous de moyens de contrôle automatiques de la pureté d'hydrogène et de remise aux spécifications de l'hydrogène. Par exemple dans le cas de purification par PSA, ceci est réalisé par diminution du temps de production par adsorbeur, à débit équivalent.

L'invention permet d'absorber ces impuretés passagères sans remettre en cause les spécifications de pureté d'hydrogène fourni au réservoir 8 aval et en diminuant ou en supprimant le gaspillage d'hydrogène.

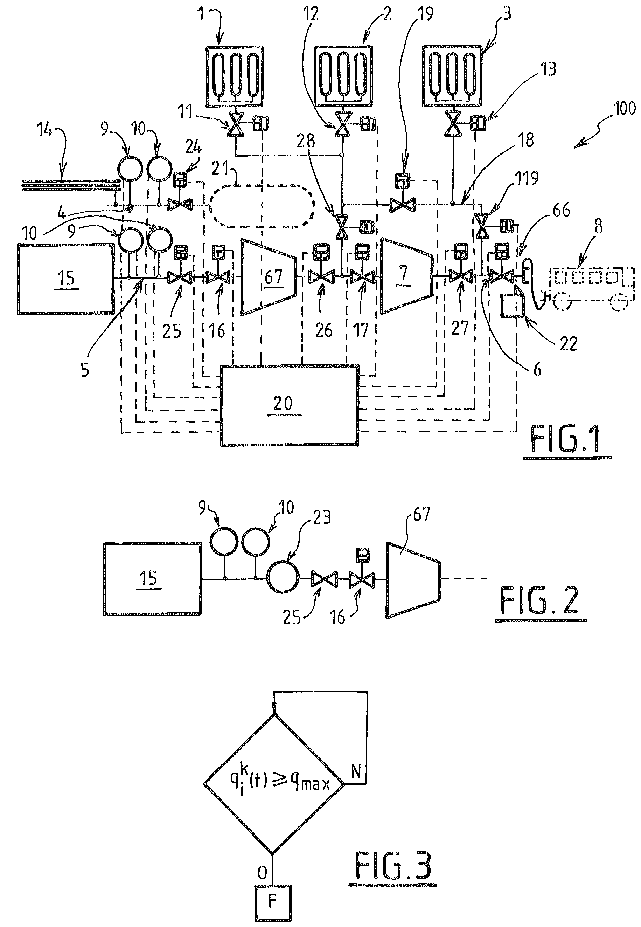

La détermination de concentration courante d'au moins une impureté peut être réalisée par une mesure 9 d'au moins un capteurde la concentration de l'impureté. Par exemple le capteur comprend un analyseur de gaz qui mesure une concentration de l'espèce chimique (impureté) dans un échantillon de gaz. Comme illustré à la figure 1, ce ou ces capteurs sont symbolisés par la référence 9 et peuvent être disposés au niveau de la source 14, 15 d'hydrogène et/ou un niveau du circuit fluidique de la station 100 de remplissage, en amont des compresseurs 67, 7. Un capteur 10 (débitmètre par exemple) peut être prévu également pour déterminer la quantité de gaz transférée en temps réel dans le contenant 1, 2, 3 tampon au cours du remplissage de ce dernier.

Ainsi, la concentration d'impureté et la quantité de gaz fourni peuvent être mesurées en continue à l'entrée de la station de remplissage 100. La concentration d'impureté peut donc être calculée à partir de la concentration d'impureté dans le gaz introduit dans le contenant tampon ainsi que la quantité du gaz introduit dans le contenant tampon. Cette concentration peut être mesurée ou donnée par la source. La qualité de gaz peut être mesurée par tout procédé classique (débitmètre notamment). Alternativement ou cumulativement, cette concentration peut être mesurée directement dans le contenant tampon (via des capteur(s) et analyseur(s) appropriée(s)).

La portion de conduite 4 (respectivement 5) de la première extrémité du circuit comprise entre le capteur 10 de débit et la vanne 24 adjacente correspondante (respectivement 25) peut être dimensionnée avec un volume déterminé pour que le temps de séjour du gaz entre le capteur 9 de concentration et la vanne 24, 25 adjacente soit supérieur au temps de réponse dudit capteur 9 de concentration.

Comme décrit ci-après en référence à la figure 2, alternativement ou cumulativement, ce temps de séjour peut aussi être obtenu par un stockage 23 sous pression positionnée entre les capteurs 9, 10 de débit et la vanne 24 adjacente située en aval (respectivement 25).

Par exemple, la concentration « q » d'une impureté en impureté en fonction du temps « t » peut être calculée ou mesurée pour chaque remplissage numéroté « k » avec k=1, 2, 3...et pour chaque contenant tampon numéroté i, avec i=1, 2, 3 selon l'expression $q_i^k(t)$.

Cette concentration $q_i^k(t)$ ne doit pas être supérieure à un seuil $q_{max}$ qui est par exemple la valeur maximale de la teneur en impureté dans la spécification du gaz (cf. figure 3 lorsque cette concentration atteint le seuil $q_{max}$, « O » le remplissage est interrompu « F », dans le cas contraire « N » le remplissage continue).

Cette concentration q peut être mémorisée pour chaque remplissage k et chaque réservoir i. La concentration en impureté est calculée notamment à la fin de l'étape de remplissage, lorsque la pression P dans le contenant tampon 1 a atteint sont seuil maximal PMAX (ou si le remplissage s'interrompt avant pour une autre raison).

Pour chaque étape de remplissage k du contenant tampon i la quantité d'impureté $q_i^k(t)$ (par exemple en ppm) peut être calculée selon la formule suivante :

$$q_i^k(t) = q_i^{k-1}(PMAX) + \frac{\int\limits_{x=0}^{x=t} FT(x) \cdot AT(x) \cdot dx}{\int\limits_{x=0}^{x=t} FT(x) \cdot dx}$$

C'est-à-dire que la quantité d'impureté résiduelle calculée ou connue auparavant (terme de gauche) est ajoutée à la quantité d'impureté courante (intégration de la teneur en impureté et du débit de compression selon le terme à droite).

Dans laquelle t représente le temps de l'étape de remplissage, FT(x) est le débit massique ou molaire total de gaz mesuré par le capteur 10 ou calculé, et AT(x) est la concentration massique ou molaire en impureté à l'instant x.

Le débit massique FT(x) est préférentiellement mesuré par un débitmètre 10 comme illustré à la figure 1. Ce débit de gaz peut être bien sûr mesuré au niveau de l'aspiration ou au niveau du refoulement d'un compresseur 67, 7.

Bien entendu, ce débit massique peut alternativement être calculé en mesurant de la montée en pression dans les contenants 1, 2, 3 (en mesurant la pression dans ou à l'entrée du contenant tampon), selon la formule suivante :

$$FT(x) = \frac{\partial(\frac{PV}{ZRT})}{dx},$$

P et T étant la pression et la température (mesurée ou estimée) dans le contenant tampon numéro i, Z étant le coefficient de compressibilité à la pression P de l'hydrogène, R la constante des gaz parfaits et x le temps.

Dans cette configuration, le remplissage du contenant tampon numéro i (i=1, 2 ou 3) peut être arrêté à la pression P=PMAX lorsque $q_i^k(t) \geq q_{max}$ (gaz hors spécification) ou lorsque la pression dans le contenant tampon i atteint la pression maximale de service prévue (contenant tampon plein).

La station 100 commute alors et remplit le réservoir tampon suivant i+1 selon le même principe.

Le remplissage du contenant tampon i lors d'un cycle de remplissage k+1 suivant ne peut reprendre que si la pression dans le contenant tampon i est inférieure à la pression maximale de service et que la lecture de $AT < q_{max}$, c'est-à-dire que l'hydrogène fourni par la source 14, 15 est redevenu de bonne qualité pour pouvoir « dépolluer » le contenant tampon (c'est-à-dire faire baisser la concentration de polluant dans le contenant tampon).

La station 100 de remplissage peut ainsi calculer et gérer dans les contenants 1, 2, 3 tampon la dilution des impuretés passagères au niveau de la source 14, 15.

L'arrêt de la station 100 n'est ainsi plus réalisé sur un critère de pureté du gaz à l'entrée de la station 100, mais sur un critère de pureté de gaz dans les contenants 1, 2, 3 tampon eux-mêmes (mesuré et calculé).

La ou les impuretés prises en compte peut comprendre par exemple au moins l'un parmi : de l'oxyde de carbone (CO), de l'eau (H2O), les composés soufrés ou halogénés, le CO2, l'Azote, l'Hélium, l'NH3, les hydrocarbures, 02, et l'Argon.

De façon générale, n'importe quelle impureté mesurable peut être prise en compte et le seuil maximum de chaque impureté peut être choisi ou modifié en fonction des spécifications de pureté en aval (du côté de l'utilisateur du gaz).

Par exemple, une impureté prise en compte peut être l'oxyde de carbone CO et le seuil de concentration peut être compris entre 0.1 ppm et 10 ppm et de préférence compris entre 0,1ppm et 0,3ppm, par exemple 0,2ppm. Dans le cas de l'impureté H2O (eau), le seuil de concentration peut être compris entre 1 ppm et 100ppm et de préférence compris entre 3ppm et 7ppm, par exemple 5ppm.

Comme illustré à la figure 1, tout ou partie des étapes de calcul, de mémorisation, de comparaison, de contrôle du remplissage peuvent être réalisée par la logique 20 électronique. A cet effet, la logique 20 peut être reliée (avec ou sans fil) aux organes de la station 100 de remplissage.

Bien entendu, l'invention n'est pas limitée à l'exemple de réalisation décrit ci-dessus. Par exemple, et comme illustré à la figure 2, le calcul de la concentration d'impureté peut être réalisé au niveau d'un stockage 23 de gaz à basse pression installé entre les capteurs 9, 10 et un compresseur 67. Les éléments identiques à ceux décrits précédemment sont désignés par les mêmes référence set ne sont pas décrits une seconde fois.

Comme expliqué ci-dessus, ceci peut permettre de faire stocker le gaz avant de remplir les contenants 1, 2, 3 tampon pour éviter un décalage entre le temps d'analyse du ou des capteurs 9, 10 et l'introduction de gaz dans les contenants 1, 2,3 tampon.

On conçoit donc aisément que l'invention permet d'utiliser une ou des sources d'hydrogène dont les caractéristiques de pureté ne sont pas constantes en continu, sans pour autant nécessiter un système de pré-purification coûteux ni sans nécessiter des arrêts intempestifs de la station.

Dans le cas où le prix de l'hydrogène fourni par des sources est variable en fonction de sa pureté, la station selon l'invention permet de s'approvisionner à moindre coût.

**Revendications**

1. Procédé de remplissage d'au moins un contenant (1, 2, 3) tampon d'une station (100) de remplissage d'hydrogène gazeux sous pression, la station (100) de remplissage comprenant au moins un contenant tampon (1, 2, 3) et un circuit (11, 12, 13, 4, 5, 6) fluidique relié audit au moins un contenant (1, 2, 3) tampon, le circuit (11, 12, 13, 4, 5, 6) de la station (100) de remplissage comprenant une première extrémité reliée à au moins une source (14, 15) d'hydrogène gazeux pour assurer le remplissage du au moins un contenant (1, 2, 3) tampon par du gaz provenant de la source (14, 15), le circuit (11, 12, 13, 4, 5, 6) comprenant une seconde extrémité munie d'une conduite (6) de transfert destinée à être reliée de façon amovible à un réservoir (8), pour remplir ledit réservoir (8) à partir du au moins un contenant tampon (1, 2, 3) avec de l'hydrogène gazeux ayant une concentration d'au moins une impureté déterminée inférieure à un seuil de concentration déterminé, le procédé étant **caractérisé en ce qu'**il comprend une étape de détermination (9, 10) de concentration courante d'au moins une impureté dans l'hydrogène dans le contenant (1, 2, 3) tampon au cours de son remplissage, une étape de comparaison de ladite concentration courante de l'impureté par rapport à un seuil de concentration déterminé et, lorsque la concentration courante de la au moins une impureté atteint ledit seuil de concentration, un arrêt du remplissage dudit contenant (1, 2, 3) tampon, l'étape de détermination (9, 10) de concentration courante d'au moins une impureté dans le contenant comprenant au moins l'un parmi :

- Une mesure de concentration de l'impureté directement dans le contenant tampon via des capteur(s) et analyseur(s),
- - une mesure (9) par capteur(s) de la concentration de l'impureté au niveau de la au moins une source (4, 5) d'hydrogène et/ou au niveau du circuit fluidique de la station (100) de remplissage et une détermination (10) de la quantité de gaz transféré en temps réel dans le contenant (1, 2, 3) tampon au cours du remplissage de ce dernier ladite concentration courante étant déterminée par calcul à partir ladite concentration de l'impureté et de la quantité du gaz introduit dans le contenant tampon, la détermination (10) de la quantité de gaz transféré en temps réel dans le contenant (1, 2, 3) au cours de son remplissage comprend au moins l'un parmi : une mesure par un débitmètre dans le circuit (11, 12, 13, 4, 5, 6), une mesure de la variation de pression dans le contenant (1, 2, 3) tampon au cours du remplissage de ce dernier.

2. Procédé selon la revendication 1, **caractérisé en ce qu'**il comprend une étape de mémorisation de la concentration courante résiduelle d'impureté dans le contenant (1, 2, 3) tampon déterminée lors d'un remplissage précédent du contenant (1, 2, 3) tampon et **en ce que** l'étape de détermination (9, 10) de concentration courante d'au moins une impureté dans l'hydrogène dans le contenant (1, 2, 3) tampon lors d'un remplissage suivant, ajoute la concentration d'impureté résiduelle dans le réservoir (1, 2, 3) tampon déterminée lors du remplissage précédent à la concentration d'impureté ajoutée dans contenant (1, 2, 3) tampon lors du remplissage suivant.

3. Procédé selon l'une quelconque des revendications 1 à 2, **caractérisé en ce que** la station (100) de remplissage comprend plusieurs contenant (1, 2, 3) tampon remplis avec de l'hydrogène gazeux sous pression à des pressions distinctes.

4. Procédé selon la revendication 3, **caractérisé en ce que**, après remplissage, les contenant (1, 2, 3) tampon sont utilisés successivement par ordre de pression croissante pour remplir un réservoir (8) via des équilibrages de pression successifs.

5. Procédé selon l'une quelconque des revendications 1 à 4, **caractérisé en ce que** la au moins une source (14, 15) d'hydrogène comprend au moins l'un parmi : un réseau (14) de gaz d'hydrogène à une pression comprise entre 1.3 bar abs et 200 bar abs, un organe (15) de production d'hydrogène.

6. Procédé selon la revendication 5, **caractérisé en ce que** l'organe (15) de production d'hydrogène comprend au moins l'un parmi : un électrolyseur, un reformeur de gaz naturel (« SMR »), un dispositif de craquage de méthanol, un dispositif de reformage autotherme (« ATR »), un dispositif d'oxydation partiel (« POX »).

7. Procédé selon l'une quelconque des revendications 1 à 6, **caractérisé en ce que** la au moins une impureté comprend au moins l'un parmi : de l'oxyde de carbone (CO), de l'eau (H2O), au moins un composé soufrés ou halogénés, le CO2, l'Azote, l'Hélium, le NH3, au moins un hydrocarbures, 02, et l'argon.

8. Procédé selon l'une quelconque des revendications 1 à 6, **caractérisé en ce que** la au moins une impureté comprend de l'oxyde de carbone (CO) et **en ce que** le seuil de concentration est compris entre 0.1 ppm et 10 ppm et de préférence compris entre 0,1ppm et 0,3ppm.

9. Procédé selon l'une quelconque des revendications 1 à 8, **caractérisé en ce que** la au moins une impureté comprend de l'eau (H2O) et **en ce que** le seuil de concentration est compris entre 1 ppm et à 100 ppm et de préférence compris entre 3ppm et 7ppm.

10. Procédé selon l'une quelconque des revendications 1 à 9, **caractérisé en ce que** la station (100) de remplissage comprenant au moins un organe (67, 7) de compression pour comprimer de l'hydrogène gazeux fourni au contenant (1, 2, 3) tampon ou au réservoir (8).

11. Procédé selon l'une quelconque des revendications 1 à 10 **caractérisé en ce que** après arrêt du remplissage dudit contenant tampon en raison d'une concentration courante de l'impureté au niveau du seuil, le procédé comporte une étape de remplissage d'un autre contenant tampon, c'est-à-dire que le transfert de gaz provenant de la source est commuté vers un autre tampon selon le même processus.

12. Procédé selon l'une quelconque des revendications 1 à 11 **caractérisé en ce que** après arrêt du remplissage dudit contenant tampon en raison d'une concentration courante de l'impureté au niveau du seuil, le remplissage de ce même contenant tampon n'est redémarré que lorsque la concentration en impureté dans le gaz de la source fourni redevient inférieure à la concentration en impureté dans le contenant tampon.

13. Station de remplissage pour réservoir d'hydrogène gazeux sous pression comprenant au moins un contenant (1, 2, 3) tampon prévu pour contenir de l'hydrogène gazeux sous pression, un circuit (11, 12, 13, 4, 5, 6) fluidique comprenant une pluralité de vannes et une logique (20) électronique de commande de la station (100) de remplissage et notamment de commande d'au moins une vanne, le circuit (11, 12, 13, 4, 5, 6) étant relié audit au moins un contenant (1, 2, 3) tampon et comprenant une première extrémité destinée à être raccordée à au moins une source (14, 15) d'hydrogène gazeux pour permettre le remplissage du au moins un contenant (1, 2, 3) tampon avec du gaz fourni par la au moins une source (14, 15), le circuit fluidique (11, 12, 13, 4, 5, 6) comprenant une seconde extrémité comprenant une conduite (6) de remplissage destinée à être reliée de façon amovible à un réservoir (8) pour remplir ledit réservoir (8) à partir du au moins un contenant tampon (1, 2, 3), avec de l'hydrogène gazeux ayant une concentration d'au moins une impureté déterminée inférieure à un seuil de concentration déterminé la station (100) étant **caractérisée en ce qu'**elle comporte au moins un organe (9, 10) de détermination de la concentration courante d'au moins une impureté dans l'hydrogène dans le contenant (1, 2, 3) tampon au cours de son remplissage ledit organe (9, 10) de détermination de la concentration courante comprenant au moins un parmi :

- des capteur(s) et analyseur(s) mesurant la concentration de l'impureté directement dans le contenant tampon et/ou
- un capteur de mesure de la concentration de l'impureté au niveau de la au moins une source (4, 5) d'hydrogène et/ou au niveau du circuit fluidique et un capteur tel qu'un débit mètre de la quantité de gaz transféré en temps réel dans le contenant (1, 2, 3) tampon au cours du remplissage de ce dernier et **en ce que** la logique (20) électronique de commande est conformée :

- pour recevoir et/ou calculer à partir de la concentration de l'impureté mesurée et de la quantité de gaz transféré dans le contenant, la concentration courante d'impureté déterminée par l'organe (9, 10) de détermination,
- pour comparer ladite concentration courante de l'impureté par rapport à un seuil de concentration prédéterminé et, lorsque la concentration courante de la au moins une impureté atteint ledit seuil de concentration, arrêter le remplissage dudit contenant (1, 2, 3) tampon.

14. Station selon la revendication 13, **caractérisée en ce que** l'organe (9, 10) de détermination de concentration courante comprend au moins un capteur(s) de la concentration de l'impureté au niveau de la au moins une source (4, 5) d'hydrogène et/ou un niveau du circuit fluidique de la station (100) de remplissage et au moins un organe de détermination (10) de la quantité de gaz transférée en temps réel dans le contenant (1, 2, 3) tampon au cours du remplissage de ce dernier.

15. Station selon la revendication 14, **caractérisée en ce que** l'organe de détermination de la quantité de gaz transféré dans le contenant tampon comprend au moins l'un parmi, un débitmètre (10) situé dans le circuit (11, 12, 13, 4, 5, 6), un capteur de mesure de la pression dans le contenant (1, 2, 3) tampon.

**Patentansprüche**

1. Verfahren zum Füllen mindestens eines Pufferbehälters (1, 2, 3) einer Füllstation (100) für Druckwasserstoffgas, wobei die Füllstation (100) mindestens einen Pufferbehälter (1, 2, 3) und einen fluidischen Kreislauf (11, 12, 13, 4, 5, 6) umfasst, der mit dem mindestens einen Pufferbehälter (1, 2, 3) verbunden ist, wobei der Kreislauf (11, 12, 13, 4, 5, 6) der Füllstation (100) ein erstes Ende umfasst, das mit mindestens einer Wasserstoffgasquelle (14, 15) verbunden ist, um die Füllung des mindestens einen Pufferbehälters (1, 2, 3) durch aus der Quelle (14, 15) kommendes Gas sicherzustellen, wobei der Kreislauf (11, 12, 13, 4, 5, 6) ein zweites Ende umfasst, das mit einer Transferleitung (6) versehen ist, die dazu bestimmt ist, lösbar mit einem Speicher (8) verbunden zu werden, um den Speicher (8) aus dem mindestens einen Pufferbehälter (1, 2, 3) mit Wasserstoffgas mit einer Konzentration von mindestens einer bestimmten Verunreinigung unterhalb einer bestimmten Konzentrationsschwelle zu füllen, wobei das Verfahren **dadurch gekennzeichnet ist, dass** es einen Schritt zur Bestimmung (9, 10) einer aktuellen Konzentration von mindestens einer Verunreinigung im Wasserstoff in dem Pufferbehälter (1, 2, 3) während seiner Füllung, einen Schritt zum Vergleichen der aktuellen Konzentration der Verunreinigung mit einer bestimmten Konzentrationsschwelle, und, wenn die aktuelle Konzentration der mindestens einen Verunreinigung die Konzentrationsschwelle erreicht, einen Stopp der Füllung des Pufferbehälters (1, 2, 3) umfasst, wobei der Schritt zur Bestimmung (9, 10) der aktuellen Konzentration mindestens einer Verunreinigung in dem Behälter mindestens eines aus Folgendem umfasst:

- Eine Messung einer Konzentration der Verunreinigung direkt im Pufferbehälter mittels Sensor(en) und Analysator(en),

- - eine Messung (9) mittels Sensor(en) der Konzentration der Verunreinigung im Bereich der mindestens einen Wasserstoffquelle (4, 5) und/oder im Bereich des fluidischen Kreislaufs der Füllstation (100) und eine Bestimmung (10) der in Echtzeit in den Pufferbehälter (1, 2, 3) transferierten Gasmenge während der Füllung des letzteren, wobei die aktuelle Konzentration durch Berechnung aus der Konzentration der Verunreinigung und der in den Pufferbehälter eingeleiteten Gasmenge bestimmt wird, wobei die Bestimmung (10) der Gasmenge, die in Echtzeit in den Behälter (1, 2, 3) während seiner Füllung transferiert wird, mindestens eines aus Folgendem umfasst: eine Messung mittels eines Durchflussmessers im Kreislauf (11, 12, 13, 4, 5, 6), eine Messung der Druckänderung im Pufferbehälter (1, 2, 3) während der Füllung des letzteren.

2. Verfahren nach Anspruch 1, **dadurch gekennzeichnet, dass** es einen Schritt zur Speicherung der aktuellen Restkonzentration von Verunreinigung in dem Pufferbehälter (1, 2, 3) umfasst, die während einer vorherigen Füllung des Pufferbehälters (1, 2, 3) bestimmt wurde, und dadurch, dass der Schritt zur Bestimmung (9, 10) einer aktuellen Konzentration mindestens einer Verunreinigung im Wasserstoff im Pufferbehälter (1, 2, 3) während einer nachfolgenden Füllung die während der vorherigen Füllung bestimmte Restverunreinigungskonzentration im Pufferspeicher (1, 2, 3) zu der während der nachfolgenden Füllung im Pufferbehälter (1, 2, 3) hinzugefügten Verunreinigungskonzentration hinzufügt.

3. Verfahren nach einem der Ansprüche 1 bis 2, **dadurch gekennzeichnet, dass** die Füllstation (100) mehrere mit Druckwasserstoffgas gefüllte Pufferbehälter (1, 2, 3) bei unterschiedlichen Drücken umfasst.

4. Verfahren nach Anspruch 3, **dadurch gekennzeichnet, dass** nach Füllung die Pufferbehälter (1, 2, 3) nacheinander in Reihenfolge aufsteigenden Drucks verwendet werden, um einen Speicher (8) über aufeinanderfolgende Druckausgleiche zu füllen.

5. Verfahren nach einem der Ansprüche 1 bis 4, **dadurch gekennzeichnet, dass** die mindestens eine Wasserstoffquelle (14, 15) mindestens eines aus Folgendem umfasst: einem Wasserstoffgasnetz (14) bei einem Druck zwischen 1,3 bar abs und 200 bar abs, einem Wasserstoffproduktionsorgan (15).

6. Verfahren nach Anspruch 5, **dadurch gekennzeichnet, dass** das Wasserstoffproduktionsorgan (15) mindestens eines aus Folgendem umfasst: einem Elektrolyseur, einem Erdgasreformer ("SMR"), einer Methanol-Crackvorrichtung, einer autothermen Reformvorrichtung ("ATR"), einer Teiloxidationsvorrichtung ("POX").

7. Verfahren nach einem der Ansprüche 1 bis 6, **dadurch gekennzeichnet, dass** die mindestens eine Verunreinigung mindestens eines aus Folgendem umfasst: Kohlenmonoxid (CO), Wasser (H2O), mindestens einer schwefelhaltigen oder halogenierten Verbindung, CO2, Stickstoff, Helium, NH3, mindestens einem Kohlenwasserstoff, 02 und Argon.

8. Verfahren nach einem der Ansprüche 1 bis 6, **dadurch gekennzeichnet, dass** die mindestens eine Verunreinigung Kohlenmonoxid (CO) umfasst und dass die Konzentrationsschwelle zwischen 0,1ppm und 10 ppm und bevorzugt zwischen 0,1ppm und 0,3ppm liegt.

9. Verfahren nach einem der Ansprüche 1 bis 8, **dadurch gekennzeichnet, dass** die mindestens eine Verunreinigung Wasser (H2O) umfasst und dadurch, dass die Konzentrationsschwelle zwischen 1 ppm und bis 100 ppm und bevorzugt zwischen 3ppm und 7ppm liegt.

10. Verfahren nach einem der Ansprüche 1 bis 9, **dadurch gekennzeichnet, dass** die Füllstation (100) mindestens ein Verdichtungsorgan (67, 7) zum Verdichten von Wasserstoffgas umfasst, das dem Pufferbehälter (1, 2, 3) oder dem Speicher (8) zugeführt wird.

11. Verfahren nach einem der Ansprüche 1 bis 10, **dadurch gekennzeichnet, dass** das Verfahren nach einem Stopp der Füllung des Pufferbehälters aufgrund einer aktuellen Konzentration der Verunreinigung im Bereich der Schwelle einen Schritt zur Füllung eines anderen Pufferbehälters umfasst, das heißt, dass der Transfer von aus der Quelle kommendem Gas nach dem gleichen Prozess auf einen anderen Puffer umgestellt wird.

12. Verfahren nach einem der Ansprüche 1 bis 11, **dadurch gekennzeichnet, dass** nach einem Stopp der Füllung des Pufferbehälters aufgrund einer aktuellen Konzentration der Verunreinigung im Bereich der Schwelle, die Füllung des gleichen Pufferbehälters nur dann neu gestartet wird, wenn die Konzentration an Verunreinigung im Gas der zugeführten Quelle wieder niedriger wird als die Konzentration an Verunreinigung im Pufferbehälter.

13. Füllstation für einen Druckwasserstoffgas-Speicher, umfassend mindestens einen Pufferbehälter (1, 2, 3), der dazu vorgesehen ist, um Druckwasserstoffgas zu enthalten, einen fluidischen Kreislauf (11, 12, 13, 4, 5, 6), der eine Vielzahl von Ventilen umfasst, und eine elektronische Logik (20) zum Steuern der Füllstation (100) und insbesondere zum Steuern mindestens eines Ventils, wobei der Kreislauf (11, 12, 13, 4, 5, 6) mit dem mindestens einen Pufferbehälter (1, 2, 3) verbunden ist und ein erstes Ende umfasst, das dazu bestimmt ist, mit mindestens einer Wasserstoffgasquelle (14, 15) verbunden zu werden, um die Füllung des mindestens einen Pufferbehälters (1, 2, 3) mit Gas zu ermöglichen, das von der mindestens einen Quelle (14, 15) zugeführt wird, wobei der fluidische Kreislauf (11, 12, 13, 4, 5, 6) ein zweites Ende umfasst, das eine Füllleitung (6) umfasst, die dazu bestimmt ist, lösbar mit einem Speicher (8) verbunden zu werden, um den Speicher (8) aus dem mindestens einen Pufferbehälter (1, 2, 3) zu füllen, mit Wasserstoffgas mit einer Konzentration von mindestens einer bestimmten Verunreinigung unterhalb einer bestimmten Konzentrationsschwelle, wobei die Station (100) **dadurch gekennzeichnet ist, dass** sie mindestens ein Organ (9, 10) zur Bestimmung der aktuellen Konzentration von mindestens einer Verunreinigung im Wasserstoff in dem Pufferbehälter (1, 2, 3) während dessen Füllung umfasst, wobei das Organ (9, 10) zur Bestimmung der aktuellen Konzentration mindestens eines aus Folgendem umfasst:

- Sensor(en) und Analysator(en), die die Konzentration der Verunreinigung direkt im Pufferbehälter messen und/oder
- einen Sensor zum Messen der Konzentration der Verunreinigung im Bereich der mindestens einen Wasserstoffquelle (4, 5) und/oder im Bereich des fluidischen Kreislaufs und einen Sensor, wie beispielsweise einen Durchflussmesser für die Menge an Gas, das in Echtzeit in den Pufferbehälter (1, 2, 3) während der Füllung des letzteren transferiert wird, und dadurch, dass die elektronische Steuerlogik (20) ausgebildet ist:

- zum Empfangen und/oder Berechnen aus der Konzentration der gemessenen Verunreinigung und der in den Behälter transferierten Gasmenge der aktuellen Verunreinigungskonzentration, die durch das Organ (9, 10) zur Bestimmung bestimmt wird,
- zum Vergleichen der aktuellen Konzentration der Verunreinigung mit einer vorbestimmten Konzentrationsschwelle und, wenn die aktuelle Konzentration der mindestens einen Verunreinigung die Konzentrationsschwelle erreicht, Stoppen der Füllung des Pufferbehälters (1, 2, 3).

14. Station nach Anspruch 13, **dadurch gekennzeichnet, dass** das Organ (9, 10) zur Bestimmung der aktuellen Konzentration mindestens einen Sensor bzw. Sensoren für die Konzentration der Verunreinigung im Bereich der mindestens einen Wasserstoffquelle (4, 5) und/oder einem Bereich des fluidischen Kreislaufs der Füllstation (100) und mindestens ein Organ zur Bestimmung (10) der in Echtzeit in den Pufferbehälter (1, 2, 3) während der Füllung des letzteren transferierten Gasmenge umfasst.

15. Station nach Anspruch 14, **dadurch gekennzeichnet, dass** das Organ zur Bestimmung der in den Pufferbehälter transferierten Gasmenge mindestens einen aus einem in dem Kreislauf (11, 12, 13, 4, 5, 6) angeordneten Durchflussmesser (10), einem Sensor zur Messung des Drucks im Pufferbehälter (1, 2, 3) umfasst.

## Claims

1. Method for filling at least one buffer container (1, 2, 3) of a pressurised hydrogen gas filling station (100), the filling station (100) comprising at least one buffer container (1, 2, 3) and one fluid circuit (11, 12, 13, 4, 5, 6) connected to said at least one buffer container (1, 2, 3), the circuit (11, 12, 13, 4, 5, 6) of the filling station (100) comprising a first end connected to at least one source of hydrogen gas (14, 15) to provide for the filling of the at least one buffer container (1, 2, 3) with gas coming from the source (14, 15), the circuit (11, 12, 13, 4, 5, 6) comprising a second end provided with a transfer conduit (6) intended to be removably connected to a tank (8), to fill said tank (8) using at least one buffer container (1, 2, 3) with hydrogen gas that has a concentration of at least one predefined impurity less than a predefined concentration threshold, the method being **characterised in that** it comprises a step of determining (9, 10) the current concentration of at least one impurity in the hydrogen in the buffer container (1, 2, 3) during the filling of same, a step of comparing said current concentration of the impurity relative to a predefined threshold concentration and, when the current concentration of the at least one impurity reaches said threshold concentration, stopping the filling of said buffer container (1, 2, 3), the step of determining (9, 10) the current concentration of at least one impurity in the container comprising at least one from among:

- a measurement of the concentration of the impurity directly in the buffer container via sensor(s) and analyser(s),
- a measurement (9) by sensor(s) of the concentration of the impurity at the level of the at least one source (4, 5) of hydrogen and/or at the level of the fluid circuit of the filling station (100) and a determination (10) of the quantity of gas transferred in real time into the buffer container (1, 2, 3) during the filling of the latter said current concentration being determined by calculation using said concentration of the impurity and of the quantity of gas introduced into the buffer container, the determination (10) of the quantity of gas transferred in real time into the container (1, 2, 3) during the filling thereof comprises at least one from among: a measurement via a flow sensor in the circuit (11, 12, 13, 4, 5, 6), a measurement of the variation in pressure in the buffer container (1, 2, 3) during the filling of the latter.

2. Method according to claim 1, **characterised in that** it comprises a step of memorising the current residual concentration of impurity in the buffer container (1, 2, 3) determined during a preceding filling of the buffer container (1, 2, 3) and **in that** the step of determining (9, 10) the current concentration of at least one impurity in the hydrogen in the buffer container (1, 2, 3) during a following filling, adds the residual concentration of impurity in the buffer tank (1, 2, 3) determined during a preceding filling to the concentration of impurity added to the buffer container (1, 2, 3) during a subsequent filling.

3. Method according to any of claims 1 to 2, **characterised in that** the filling station (100) comprises several buffer containers (1, 2, 3) filled with pressurised hydrogen gas at separate pressures.

4. Method according to claim 3, **characterised in that**, after filling, the buffer containers (1, 2, 3) are used successively in order of increasing pressure to fill a tank (8) via successive pressure balancing.

5. Method according to any of claims 1 to 4, **characterised in that** the at least one source (14, 15) of hydrogen comprises at least one from among: a network (14) of hydrogen gas at a pressure between 1.3 bar abs and 200 bar abs, a hydrogen production member (15).

6. Method according to claim 5, **characterised in that** the hydrogen production member (15) comprises at least one from among: an electrolyser, a natural gas reformer ("SMR"), a methanol cracking device, an autothermal reformer device ("ATR"), a partial oxidation device ("POX"),

7. Method according to any of claims 1 to 6, **characterised in that** the at least one impurity comprises at least one from among: carbon oxide (CO), water ($H_2O$), at least one sulphur or halogen compound, $CO_2$, nitrogen, helium, $NH_3$, at least one hydrocarbon, $O_2$, and argon.

8. Method according to any of claims 1 to 6, **characterised in that** the at least one impurity comprises carbon oxide (CO) and **in that** the concentration threshold is between 0.1ppm and 10ppm and preferably between 0.1ppm and 0.3ppm.

9. Method according to any of claims 1 to 8, **characterised in that** the at least one impurity comprises water ($H_2O$) and **in that** the concentration threshold is between 1ppm and 100ppm and preferably between 3ppm and 7ppm.

10. Method according to any of claims 1 to 9, **characterised in that** the filling station (100) comprising at least one compression member (67, 7) for compressing the hydrogen gas supplied to the buffer container (1, 2, 3) or to the tank (8).

11. Method according to any of claims 1 to 10, **characterised in that** after stopping of the filling of said buffer container due to a current concentration of the impurity at the level of the threshold, the method comprises a step of filling another buffer container, i.e. the transfer of gas coming from the source is switched to another buffer according to the same process.

12. Method according to any of claims 1 to 11, **characterised in that** after stopping of the filling of said buffer container due to a current concentration of the impurity at the level of the threshold, the filling of this same buffer container is restarted only when the concentration of impurity in the gas of the source supplied again becomes less than the concentration of impurity in the buffer container.

13. Filling station for a tank of pressurised hydrogen gas comprising at least one buffer container (1, 2, 3) provided to contain the pressurised hydrogen gas, a fluid circuit (11, 12, 13, 4, 5, 6) comprising a plurality of valves and an electronic logic (20) for controlling the filling station (100) and in particular for controlling at least one valve, the circuit (11, 12, 13, 4, 5, 6) being connected to said at least one buffer container (1, 2, 3) and comprising a first end intended to be connected to at least one source of hydrogen gas (14, 15) to make it possible for the filling of the at least one buffer container (1, 2, 3) with gas supplied by the at least one source (14, 15), the fluid circuit (11, 12, 13, 4, 5, 6) comprising a second end comprising a filling conduit (6) intended to be removably connected to a tank (8) to fill said tank (8) using at least one buffer container (1, 2, 3), with hydrogen gas that has a concentration in at least one predefined impurity less than a predefined concentration threshold the station (100) being **characterised in that** it comprises at least one member (9, 10) for determining the current concentration of at least one impurity in the hydrogen in the buffer container (1, 2, 3) during the filling of same said member (9, 10) for determining the current concentration comprising at least one from among:

- sensor(s) and analyser(s) measuring the concentration of impurity directly in the buffer container and/or
- a sensor for measuring the concentration of the impurity at the level of at least one source (4, 5) of hydrogen and/or at the level of the fluid circuit and a sensor such as a flow sensor of the quantity of gas transferred in real time into the buffer container (1, 2, 3) during the filling of the latter and **in that** the electronic control logic (20) is shaped:

- to receive and/or calculate from the concentration of the impurity measured and of the quantity of gas transferred into the container, the current concentration of impurity determined by the determination member (9, 10),
- to compare said current concentration of the impurity relative to a predefined threshold concentration and, when the current concentration of the at least one impurity reaches said threshold concentration, stop the filling of said buffer container (1, 2, 3).

14. Station according to claim 13, **characterised in that** the member (9, 10) for determining the current concentration comprises at least one sensor of the concentration of the impurity at the level of the at least one source (4, 5) of hydrogen and/or at the level of the fluidic circuit of the filling station (100) and at least one member for determining (10) the quantity of gas transferred in real time into the buffer container (1, 2, 3) during the filling of the latter.

15. Station according to claim 14, **characterised in that** the member for determining the quantity of gas transferred into the buffer container comprises at least one from among, a flow sensor (10) located in the circuit (11, 12, 13, 4, 5, 6), a sensor for measuring the pressure in the buffer container (1, 2, 3).

FIG.1

FIG.2

$$q_i^k(t) \geq q_{max}$$

FIG.3

## RÉFÉRENCES CITÉES DANS LA DESCRIPTION

**Documents brevets cités dans la description**

- FR 2919375 A1
- FR 2973858 A1
- WO 2006031365 A
- WO 2006065673 A2